# EUROPEAN PATENT APPLICATION

(11) **EP 4 488 919 A1**
(43) Date of publication of application: **08.01.2025**
(21) Application number: 24181891.3
(22) Date of filing: 13.06.2024
(51) Int. Cl.: G06Q 30/0601, G06Q 50/04

(54) **ORDER SUPPORTING METHOD, ORDER SUPPORTING SYSTEM, AND RECORDING MEDIUM**

(30) Priority: 03.07.2023 JP 2023109412
(71) Applicant: ASICS Corporation, Kobe-shi, Hyogo 650-8555 (JP)
(72) Inventor: TAKASHIMA, Shingo, Kobe-shi, 650-8555 (JP); HATANO, Genki, Kobe-shi, 650-8555 (JP)
(74) Representative: TBK

(57) **Abstract**

To provide a computer-executed order supporting method of supporting an order of a predetermined product including any one of clothing, footwear, accessories, and a product utilized to conform to a part of a body. The method includes acquiring product shape information relating to a product shape of the predetermined product, generating, based on the product shape information, simplified shape information indicating a simplified shape of the predetermined product, the simplified shape information allowing for calculation of manufacturing condition information relating to a manufacturing condition of the predetermined product, in a manufacturing section that manufactures the predetermined product, and outputting the simplified shape information.

## Description

### CROSS-REFERENCE TO RELATED APPLICATION

This application claims priority to Japanese Patent Application No. 2023-109412, the disclosures of which are incorporated herein by reference in their entirety.

### BACKGROUND

### Technical field

The present disclosure relates generally to an order supporting method, an order supporting system, and a recording medium.

### Background Information

Typically, a system is known that provides product shape information indicating the shape of a product to acquire an estimate for a manufacture of the product.

For example, a bidding system described in Japanese Patent Application Publication No. 2002-297828 (Patent Document 1) is a bidding system for obtaining an estimate response regarding the provision of a plurality of types of products or services from a plurality of candidate providers of such products or services. Such a system registers a registration number and estimate request information relating to a product or a service for which an estimate is requested, and creates estimate request list information, based on the registered registration number. The system transmits estimate request list information and estimate request information via a computer communication network in response to a request from each candidate provider, and creates estimate list data in which the estimate response obtained from each candidate provider is compiled by type of product or service. In particular, if the provision of a plurality of types of products or services involves processing and manufacturing of a plurality of types of components, the system uses design drawing data of such components as the estimate request information.

Meanwhile, the product shape information (for example, the design drawing data) is highly confidential information because if such information is leaked, there is a risk that a third party may be able to manufacture the product. Therefore, there is a need to process the product shape information with high security in order supporting processing performed prior to ordering a product, such as estimating a manufacturing condition (for example, a price and a lead time). However, in the bidding system described in Patent Document 1, the product shape information itself is transmitted to each candidate provider, and thus, the security of the order supporting processing is not sufficient.

Therefore, an object of the present disclosure is to provide an order supporting method, an order supporting system, and a recording medium by which it is possible to support an order of a product with higher security.

### SUMMARY

An order supporting method according to one aspect of the present disclosure is a computer-executed order supporting method of supporting an order of a predetermined product including any one of clothing, footwear, accessories, and a product utilized to conform to a part of a body. The method includes acquiring product shape information relating to a product shape of a predetermined product, generating, based on the product shape information, simplified shape information indicating a simplified shape of the predetermined product, the simplified shape information allowing for calculation of manufacturing condition information relating to a manufacturing condition of the predetermined product, in a manufacturing section that manufactures the predetermined product, and outputting the simplified shape information.

According to the method of the aspect, when the simplified shape information generated based on the product shape information is used, it is possible to support an order of a product with higher security.

### BRIEF DESCRIPTION OF THE DRAWINGS

FIG. 1 is a diagram illustrating an overview of processing in an order supporting system 100 according to one aspect of the present disclosure.
FIG. 2 is a diagram illustrating a configuration of the order supporting system 100 according to one aspect of the present disclosure.
FIG. 3 is a diagram illustrating an example of a product shape.
FIG. 4A is a diagram illustrating an example of a simplified shape using a voxel.
FIG. 4B is a diagram illustrating an example of a simplified shape using a voxel.
FIG. 5A is a diagram illustrating an example of a simplified shape using a point cloud.
FIG. 5B is a diagram illustrating an example of a simplified shape using a point cloud.
FIG. 6A is a diagram illustrating an example of a simplified shape using a bounding box.
FIG. 6B is a diagram illustrating an example of a simplified shape using a bounding box.
FIG. 7 is a diagram illustrating an example of manufacturing condition information stored in a storage unit 110.
FIG. 8 is a sequence chart illustrating an example of processing in the order supporting system 100.
FIG. 9 is a diagram illustrating an example of a hardware configuration of a computer 900.

### DETAILED DESCRIPTION

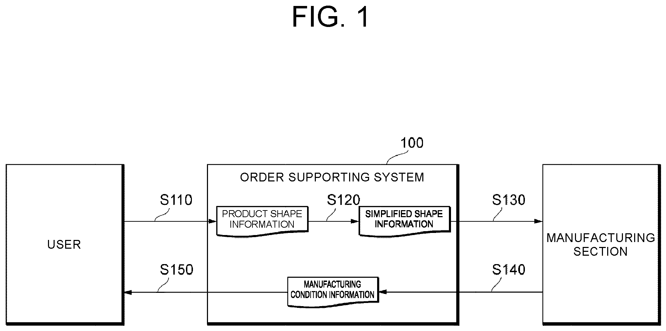

With reference to the accompanying drawings, preferred embodiments of the present disclosure will be described. FIG. 1 is a diagram illustrating an overview of processing in an order supporting system 100 according to one aspect of the present disclosure.

The order supporting system 100 is an information processing system realized by an order supporting program, and is an information processing system for generating simplified shape information, based on product shape information of a predetermined product including any one of products such as clothing, footwear, accessories, and a product utilized to conform to a part of a body, and outputting the simplified shape information to a manufacturing section.

First, the order supporting system 100 acquires the product shape information of the predetermined product from a user (S110). The order supporting system 100 generates, based on the product shape information, the simplified shape information indicating a simplified shape of the predetermined product, the simplified shape information allowing for calculation of manufacturing condition information of the predetermined product in the manufacturing section (S120). The order supporting system 100 outputs the simplified shape information to the manufacturing section (S130).

Next, the order supporting system 100 acquires the manufacturing condition information calculated based on the simplified shape information from the manufacturing section (S140), and outputs the manufacturing condition information to the user (S150).

### [Configuration of Order Supporting System 100]

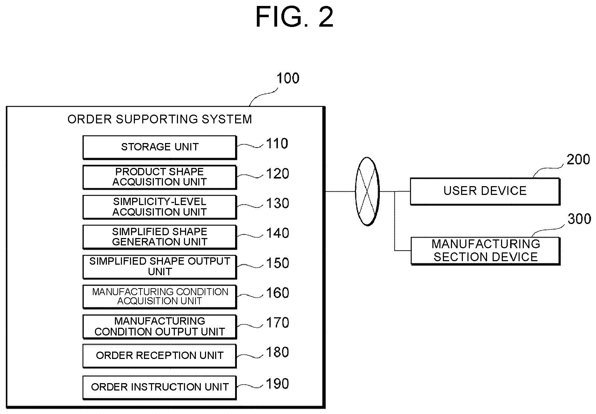

FIG. 2 is a diagram illustrating a configuration of the order supporting system 100 according to one aspect of the present disclosure. The order supporting system 100 is communicably connected to a user device 200 and a manufacturing section device 300 via a network such as the Internet. The order supporting system 100 will be described in detail later.

The user device 200 is a computer used by a user of the order supporting system 100, and may be a smartphone, a tablet terminal, a personal computer, or the like.

Here, the user is a person who uses the order supporting system 100. The user may be a consumer who desires that a predetermined product is manufactured, or the user may be a manufacturer that manufactures a predetermined product for a consumer in response to a consumer request, or the user may be an Internet-based commercial platform (EC platform), and the like.

The user accesses the order supporting system 100 through the user device 200, and requests, for example, provision of manufacturing condition information of a predetermined product (for example, information on an estimate of a price and a lead time). The user refers to the manufacturing condition information through the user device 200 and requests the order supporting system 100 to order a product.

For example, the user may wish to easily grasp the manufacturing condition information of a predetermined product. For example, in designing a product, the user may wish to easily grasp the manufacturing condition information of a prototype product. In such a case, the user may wish to grasp respective manufacturing condition information of a plurality of manufacturing sections.

In easily grasping the manufacturing condition information, the product shape information indicating a product shape of a predetermined product may not be requested, and the simplified shape information indicating a simplified shape of such a predetermined product may be sufficient. If the predetermined product is a prototype, the product shape information of such a prototype needs to be handled with particularly high security. Therefore, the order supporting system 100 generates the simplified shape information, based on the product shape information, and acquires the manufacturing condition information calculated based on the simplified shape information.

The manufacturing section device 300 is a computer used by the manufacturing section that manufactures a predetermined product, and is a smartphone, a tablet terminal, a personal computer, or the like.

Here, the manufacturing section refers to a base where a product is manufactured, and may be, for example, a business entity where the manufacturing is undertaken, a factory where the manufacturing is performed, or manufacturing equipment in a factory. That is, the order supporting system 100 may acquire the manufacturing condition information and instruct order on a business entity or factory basis, or may acquire the manufacturing condition information and instruct order, based on each manufacturing device.

It is noted that although one user device 200 and one manufacturing section device 300 are illustrated in FIG. 2, a plurality of the user devices 200 and manufacturing section devices 300 may be provided. The plurality of manufacturing section devices 300 may be manufacturing section devices 300 at the same business entity or factory, or may be manufacturing section devices 300 at a plurality of different business entities or a plurality of different factories.

Next, the order supporting system 100 will be described in detail. The order supporting system 100 includes a storage unit 110, a product shape acquisition unit 120, a simplicity-level acquisition unit 130, a simplified shape generation unit 140, a simplified shape output unit 150, a manufacturing condition acquisition unit 160, a manufacturing condition output unit 170, an order reception unit 180, and an order instruction unit 190. It is possible to realize each unit illustrated in FIG. 2, for example, by using a storage area or by a processor executing a program stored in the storage area.

The storage unit 110 stores information to be processed in the order supporting system 100. The storage unit 110 can store, for example, the product shape information, simplicity-level information, the simplified shape information, the manufacturing condition information, and order reception information, which will be described later.

The product shape acquisition unit 120 acquires the product shape information relating to the product shape of a predetermined product, and stores the product shape information in the storage unit 110.

Here, the predetermined product is any one of products such as clothing, footwear, accessories, and a product used to conform a part of the body. The clothing may be a cloth, a sock, or a hat, or may be any other clothing. The footwear may be, for example, shoes or sandals, or other footwear. The accessories may be, for example, an earphone, a mouthpiece, a ring, a necklace, or any other object worn by the user. Examples of the products used to conform a part of the body in the present disclosure include handlebars of vehicles such as automobiles, motorcycles, and bicycles, grip portions of writing implements, handles of tableware such as spoons and forks, human interfaces such as mice and keyboards, and chairs or cushions that conform to a shape of a lower back. In the present embodiment, the description proceeds by using shoes as the product, but the product is not limited thereto.

The predetermined product may also be, for example, a product manufactured to suit a user, particularly a consumer, who desires that the predetermined product is manufactured. That is, examples of the predetermined product may include a completely custom-made product or a pattern-customized product manufactured to suit a user size, a user usage situation, and the like, or a product extracted from a plurality of lineups of products based on a user size, a user usage situation, and the like.

The predetermined product may be a product for which the design and planning have been completed (that is, a commercial product), or may be a product in the prototype stage (that is, a prototype). The predetermined product may be a part (a component, so to speak) of a commercial product or a prototype.

The predetermined product may also be a product manufactured by a so-called 3D printing technique, in other word additive manufacturing technique or a three-dimensional build-up technique, for example. The predetermined product may be a product manufactured by, for example, a cutting machining method, a pressing method, or an injection molding method.

Examples of the product shape information include information relating to a size, a dimension, or a structure of the product. The product shape information is, for example, information so specifically indicating a shape of a product that it may be possible to manufacture such a predetermined product, based on the product shape information.

That is, the product shape information is information that may allow a third party to manufacture the predetermined product if the product shape information is leaked, and it can be said that the predetermined product should be managed with high security by a manufacturer or a designer who manufactures or designs the predetermined product.

The product shape acquisition unit 120 can acquire the product shape information from, for example, the user device 200. The product shape acquisition unit 120 may acquire the product shape information from, for example, a predetermined storage unit (for example, the storage unit 110 or a database of an external information processing system). In such a case, the product shape acquisition unit 120 may acquire the product shape information from a predetermined storage unit in response to an instruction from the user through the user device 200, for example.

The product shape information may be, for example, information in a format processible in Computer Aided Design (CAD) software or Computer Aided Engineering (CAE) software, or information in a format allowing the predetermined product to be 3D printed on a predetermined 3D printer.

The simplicity-level acquisition unit 130 acquires the simplicity-level information indicating the level of simplicity of the simplified shape information described later, the simplicity-level information set by the user, and stores the simplicity-level information in the storage unit 110.

The simplicity-level information may be, for example, a qualitative indicator such as "high," "medium," or "low," or may be an indicator using a numerical value such as "30%," "50%," or "70%."

The simplicity-level acquisition unit 130 can acquire the simplicity-level information by accepting a setting of the simplicity-level information from the user, based on, for example, an operation of the user through the user device 200.

The simplicity-level information may be information that is set according to the level of security in the product shape information, the level of security being set by the user. The simplicity-level acquisition unit 130 can acquire the simplicity-level information according to the level of security set by the user, based, for example, on a previously set correspondence relationship between the level of security and the simplicity level. The simplicity-level information may not necessarily set by the user, and may be set as an initial setting, for example.

The level of security may be a qualitative indicator such as "high", "medium", or "low", or may be an indicator using a numerical value such as "30%", "50%", or "70%".

The simplified shape generation unit 140 generates the simplified shape information indicating a simplified shape of a predetermined product, based on the product shape information, and stores such information in the storage unit 110.

Here, the simplified shape information indicates the simplified shape of the predetermined product, and in the manufacturing section, 1. based only on the simplified shape information, it is not possible to manufacture the predetermined product, and 2. based on the simplified shape information, it is possible to calculate a manufacturing condition in manufacturing the predetermined product.

Specifically, for example, the simplified shape information may be information in which the resolution of the dimensions of the product indicated by the product shape information is reduced. That is, the manufacturing section is not capable of manufacturing the predetermined product, based on the simplified shape information.

With the simplified shape information, it is possible to calculate the manufacturing condition information relating to the manufacturing condition of the predetermined product, in the manufacturing section. The manufacturing condition information will be described in detail later, but the manufacturing condition information is, for example, information relating to the manufacturing condition (such as a price or a lead time) in manufacturing the predetermined product in the manufacturing section.

Thus, it can be said that the simplified shape information is not precise enough to enable manufacturing of the predetermined product, based on the simplified shape information, but is precise enough to enable calculation of the manufacturing condition, based on the simplified shape information, and has a certain degree of precision regarding the product shape of the predetermined product.

The simplified shape generation unit 140 can generate the simplified shape information, based on the simplicity-level information. That is, the simplified shape generation unit 140 can generate more precise simplified shape information if the simplicity-level information is "low" or the level of security is "low", and can generate more simplified shape information if the simplicity-level information is "high" or the level of security is "high".

The simplified shape information may be information expressing the simplified shape of the predetermined product by using at least one of a voxel, a point cloud, and a bounding box, for example.

Here, the voxel is, for example, the smallest unit for expressing a solid object on a computer. If the simplified shape is expressed by using the voxel, for example, the simplified shape is expressed by plotting the voxel having a predetermined voxel size at coordinates corresponding to the product shape. That is, a larger voxel size indicates a more simplified shape, and a smaller voxel size indicates a more precise shape (that is, a shape closer to the product shape).

The point cloud is, for example, a collection of points in a three-dimensional space. If the simplified shape is expressed by using the point cloud, for example, the simplified shape is expressed by plotting a point cloud having a predetermined number of points at coordinates corresponding to the product shape. That is, a smaller number of points indicate a more simplified shape, and a larger number of points indicate a more precise shape (that is, a shape closer to the product shape).

The bounding box is a subregion enclosing an object on a computer. If the simplified shape is expressed by using the bounding box, when the product shape is enclosed by using a predetermined number of bounding boxes (that is, a predetermined number of bounding boxes are used to divide the product shape), the simplified shape is expressed. A smaller number of divisions indicates a more simplified shape, and a larger number of divisions indicates a more precise shape (that is, a shape closer to the product shape). There are no limitations on the orientation of each of the predetermined number of bounding boxes (orientation of surfaces configuring the bounding box). For example, the orientations of each of the predetermined number of bounding boxes may be the same as or different from one another. If the orientations of a predetermined number of bounding boxes are the same, for example, each side configuring each bounding box may be parallel to three mutually perpendicular axes (X/Y/Z axes) in a global coordinate system.

The simplified shape generation unit 140 is capable of generating the simplified shape information of a granularity of at least any one of the voxel, the point cloud, and the bounding box according to the simplicity-level information. Here, the granularity is, for example, a granularity according to the simplicity-level information, and further, is a granularity of at least one of the voxel, the point cloud, and the bounding box expressing the simplified shape information (for example, a voxel size, the number of point clouds, and the number of divisions, as described below).

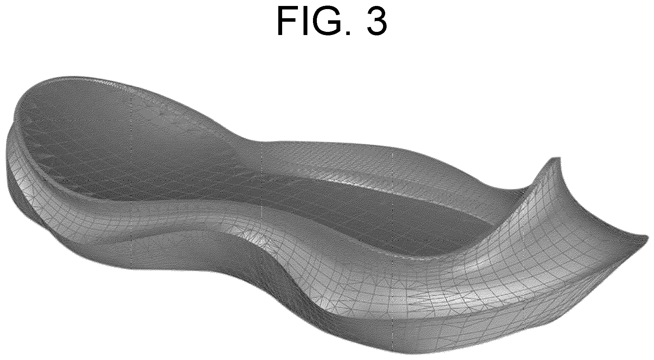

A process of generating the simplified shape information by the simplified shape generation unit 140 will be described with reference to FIG. 3 to FIG. 6. FIG. 3 is a diagram illustrating an example of the product shape. A product shape illustrated in FIG. 3 illustrates, for example, a part of a shoe.

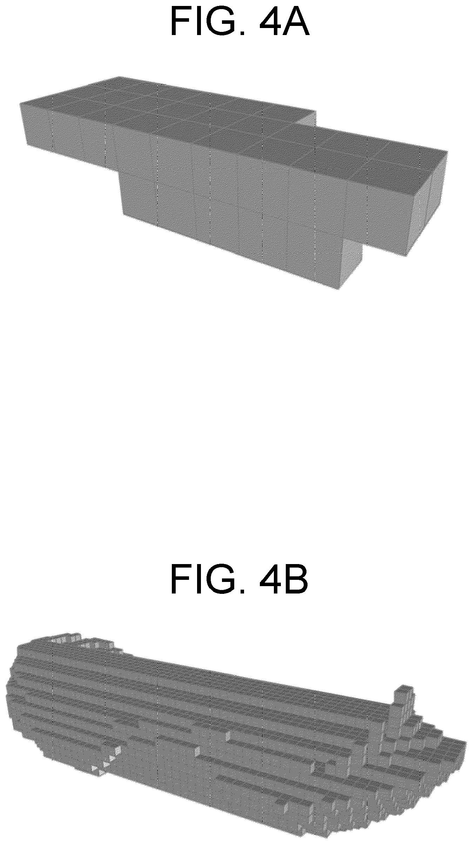

FIG. 4A and FIG. 4B are diagrams illustrating examples of simplified shapes using voxels. FIG. 4A illustrates an example of the simplified shape using a voxel with a larger voxel size (that is, lower granularity). FIG. 4B illustrates an example of the simplified shape using voxels with a smaller voxel size (that is, higher granularity). The simplified shape illustrated in FIG. 4B is closer to the product shape illustrated in FIG. 3 than the simplified shape illustrated in FIG. 4A.

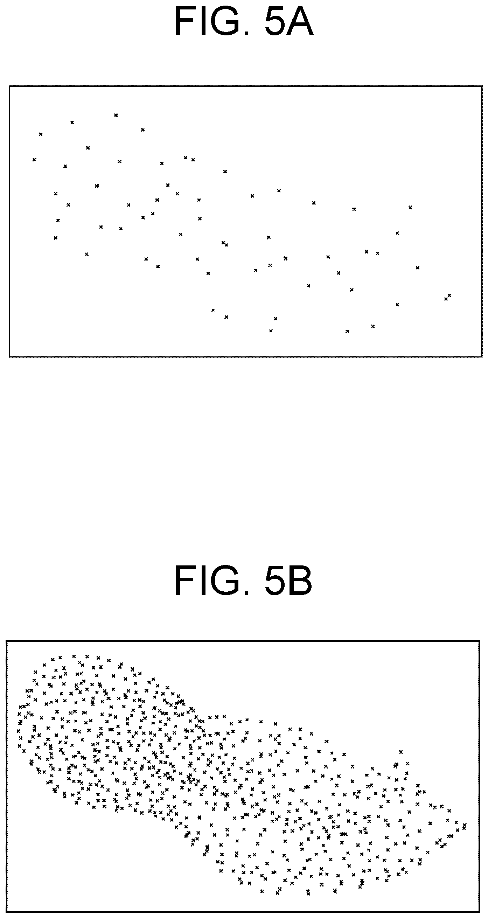

FIG. 5A and FIG. 5B are diagrams illustrating examples of simplified shapes using a point cloud. FIG. 5A illustrates an example of the simplified shape using a point cloud having a smaller number of points (that is, having a lower granularity). FIG. 5B illustrates an example of the simplified shape using a point cloud having a larger number of points (that is, having a higher granularity). The simplified shape illustrated in FIG. 5B is closer to the product shape illustrated in FIG. 3 than the simplified shape illustrated in FIG. 5A.

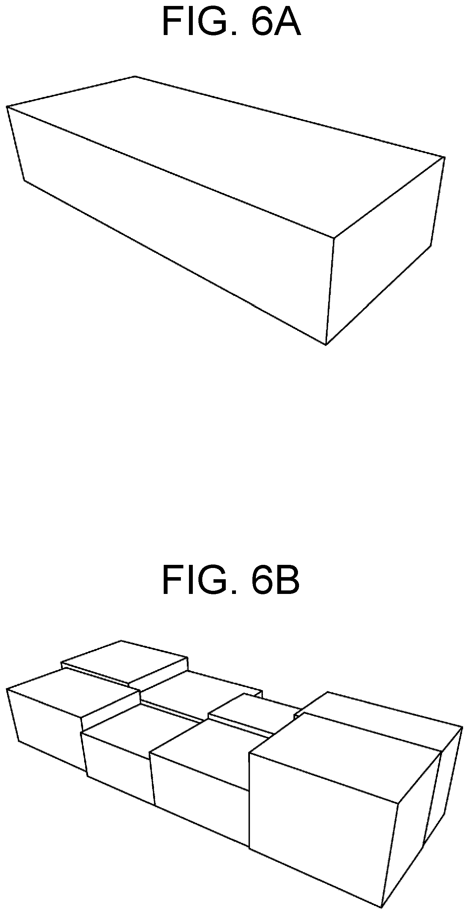

FIG. 6A and FIG. 6B are diagrams illustrating examples of simplified shapes using a bounding box. FIG. 6A illustrates an example of the simplified shape using a bounding box with a fewer number of divisions (that is, lower granularity). FIG. 6B illustrates an example of the simplified shape using a bounding box with a larger number of divisions (that is, higher granularity). The simplified shape illustrated in FIG. 6B is closer to the product shape illustrated in FIG. 3 than the simplified shape illustrated in FIG. 6A.

It is noted that a specific process for generating the simplified shape information by using at least one of the voxel, the point cloud, and the bounding box is realized by a person skilled in the art by using a predetermined technique.

The simplified shape generation unit 140 can extract at least one item of simplified shape information, out of a plurality of items of simplified shape information, based on the product shape indicated by the product shape information to generate the simplified shape information.

At this time, the plurality of items of simplified shape information are stored in advance in, for example, a predetermined storage unit. Next, the simplified shape generation unit 140 extracts at least one item of simplified shape information, based on the product shape indicated by the product shape information and a level of similarity to the simplified shape indicated by each of the plurality of items of simplified shape information, for example. More specifically, the simplified shape generation unit 140 calculates, for example, the level of similarity between the product shape indicated by the product shape information and the simplified shape indicated by each of the plurality of items of simplified shape information, and extracts the simplified shape information having the highest level of similarity.

Here, the level of similarity may be, for example, a cosine similarity among the point cloud indicating shapes, a level of similarity based on Euclidean distance, or a level of similarity based on a clustering method such as the k-means method.

Each of the plurality of previously set simplified shape information may be simplified shape information previously generated by the simplified shape generation unit 140, or may be simplified shape information previously set by an administrator of the order supporting system 100.

Each of the plurality of previously set simplified shape information may include information corresponding to the simplicity-level information. In such a case, each of the plurality of items of simplified shape information may be, for example, simplified shape information corresponding to a plurality of levels of simplicity for each of the plurality of product shapes. As a result, the simplified shape generation unit 140 can extract at least one item of simplified shape information, based on the level of similarity to the product shape indicated by the product shape information and the simplicity-level information, out of the plurality of items of simplified shape information, to generate the simplified shape information.

The simplified shape output unit 150 outputs the simplified shape information. The simplified shape output unit 150 is capable of outputting the simplified shape information to, for example, the manufacturing section device 300.

At this time, the simplified shape output unit 150 may output, together with the simplified shape information, manufacturing method information indicating a method of manufacturing a predetermined product, to the manufacturing section device 300. Examples of the manufacturing method may include a 3D printing technique for example, an additive manufacturing technique or three-dimensional build-up technique, a cutting machining method, a pressing method, or an injection molding method.

The manufacturing condition acquisition unit 160 acquires the manufacturing condition information calculated based on the simplified shape information, and stores the manufacturing condition information in the storage unit 110.

The manufacturing condition acquisition unit 160 can acquire the manufacturing condition information from, for example, the manufacturing section device 300. The manufacturing condition information acquired by the manufacturing condition acquisition unit 160 may be, for example, manufacturing condition information calculated by the manufacturing section device 300 based on the simplified shape information.

Here, the manufacturing condition information may include at least one item of information relating to a price and information relating to a lead time in manufacturing a predetermined product by the manufacturing section.

The manufacturing condition information may be information calculated with an accuracy corresponding to the simplicity-level information. That is, if the simplicity-level information is "low", the manufacturing condition information may be for a more accurate estimated price or lead time, and if the simplicity-level information is "high", the manufacturing condition information may be for a less accurate estimated price or lead time.

The manufacturing condition information may also include environmental indicator information. The environmental indicator information relates to an impact (environmental indicator) on the environment caused by the production when the manufacturing section manufactures the predetermined product. The environmental indicator information may be expressed, for example, as a score, a rank, or a level, or may be expressed with a symbol such as "S", "A", and "B".

The environmental indicator may be, for example, at least one of the following indicators: a carbon dioxide emission amount, a solvent usage amount, an impact level on ozone layer depletion, an electricity consumption amount, and water usage amount resulting from the manufacture of a predetermined product in the manufacturing section, or may be an indicator calculated based on the above indicators. A user referring to the manufacturing condition information including the environmental indicator information can consider ordering a predetermined product or the supplier manufacturing section, taking into account not only the price or the lead time but also the environmental impact caused by the manufacturing.

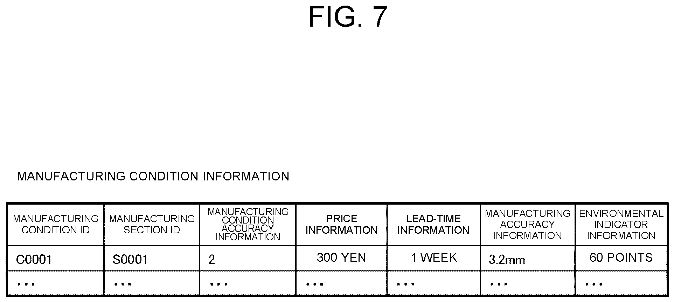

FIG. 7 is a diagram illustrating an example of the manufacturing condition information stored in the storage unit 110. Examples of the manufacturing condition information stored in the storage unit 110 include a manufacturing condition ID, a manufacturing section ID, manufacturing condition accuracy information, price information, lead time information, manufacturing accuracy information, and environmental indicator information.

The manufacturing condition ID is used for identifying the manufacturing condition information stored in the storage unit 110. The manufacturing section ID is used for identifying the manufacturing section.

The manufacturing condition accuracy information indicates the accuracy of the manufacturing condition information (particularly, the price information and lead time information, which will be described later). The accuracy indicated by the manufacturing condition accuracy information is, for example, an accuracy corresponding to the level of simplicity of the simplified shape information or the level of security. The manufacturing condition accuracy information may indicate the accuracy by using a five-level rating (for example, five stars).

The price information indicates a price for manufacturing the product in the manufacturing section (in other words, an estimated price). The lead time information indicates a lead time when the product is manufactured in the manufacturing section (in other words, an estimated lead time).

The manufacturing accuracy information indicates the accuracy of a product to be manufactured when the product is manufactured in the manufacturing section. In other words, the manufacturing accuracy information indicates an error during a manufacture in the manufacturing section. The manufacturing accuracy information may indicate a dimensional error, or may indicate a defect rate or a return rate.

The environmental indicator information indicates an environmental indicator when the product is manufactured in the manufacturing section. The environmental indicator information may be a score, based on a plurality of environmental indicators, or may be a value of each of the plurality of environmental indicators (for example, the carbon dioxide emission amount).

The manufacturing condition output unit 170 outputs the manufacturing condition information to the user device 200.

The user refers to the manufacturing condition information through the user device 200, and considers, for example, which manufacturing section the predetermined product is ordered to.

The order reception unit 180 receives the order from the user, based on the manufacturing condition indicated by the manufacturing condition information.

The order reception unit 180 can receive the order from, for example, the user device 200. Specifically, the order reception unit 180 can acquire, for example, the order reception information from the user device 200, and storing the order reception information in the storage unit 110.

The order reception information may include, for example, the manufacturing section ID.

In response to the order reception information acquired by the order reception unit 180, the order instruction unit 190 requests the supplier manufacturing section device 300 to manufacture the predetermined product, based on the manufacturing condition information. Specifically, the order instruction unit 190 outputs order instruction information to the manufacturing section device 300. At this time, the order supporting system 100 may output the product shape information to the manufacturing section device 300. This allows the manufacturing section to manufacture the predetermined product, based on the product shape information.

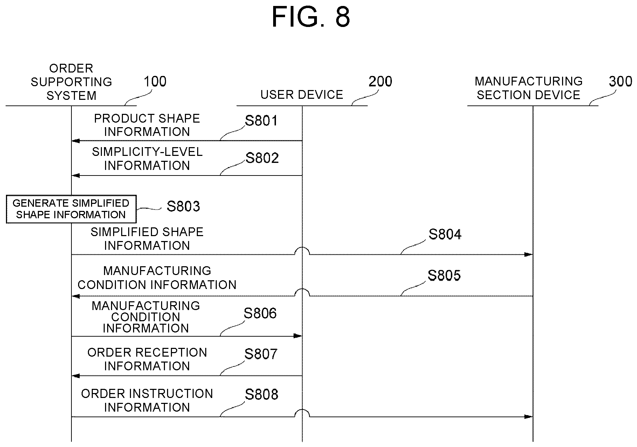

FIG. 8 is a sequence chart illustrating an example of processing in the order supporting system 100.

First, the product shape acquisition unit 120 acquires the product shape information, for example, from the user device 200 (S801). The simplicity-level acquisition unit 130 acquires the simplicity-level information, for example, from the user device 200 (S802). The simplified shape generation unit 140 generates the simplified shape information, based on the product shape information and the simplicity-level information (S803). The simplified shape output unit 150 outputs the simplified shape information to, for example, the manufacturing section device 300 (S804).

Next, the manufacturing condition acquisition unit 160 acquires the manufacturing condition information, for example, from the manufacturing section device 300 (S805). The manufacturing condition output unit 170 outputs the manufacturing condition information to, for example, the user device 200 (S806).

Next, the order reception unit 180 acquires the order reception information, for example, from the user device 200 (S807). The order instruction unit 190 outputs the order instruction information to, for example, the manufacturing section device 300 (S808).

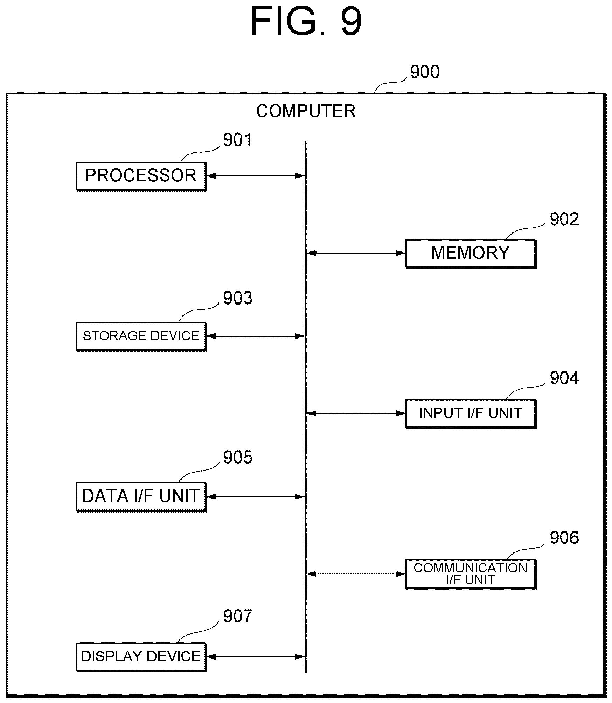

Next, with reference to FIG. 9, an example of a hardware configuration in which the order supporting system 100 is realized by a computer 900 will be described. FIG. 9 is a diagram illustrating an example of the hardware configuration of the computer 900.

As illustrated in FIG. 9, the computer 900 includes, for example, a processor 901, a memory 902, a storage device 903, an input I/F unit 904, a data I/F unit 905, a communication I/F unit 906, and a display device 907.

Examples of the computer 900 may include a server computer (including a cloud computing), a personal computer (for example, a desktop, a laptop, and a tablet), a media computing platform (for example, a cable, a satellite set-top box, and a digital video recorder), a handheld computing device (for example, a PDA, and an email client), any other type of computing, or a communications platform.

The processor 901 is a control unit to control various types of processes in the computer 900 by executing a program stored in the memory 902.

The memory 902 is a storage medium such as Random Access Memory (RAM). The memory 902 temporarily stores a program code of the program executed by the processor 901 and data required when the program is executed.

The storage device 903 is a non-volatile storage medium such as a hard disk drive (HDD) or a flash memory. The storage device 903 stores an operating system and various types of programs for implementing each of the above-mentioned configurations.

The input I/F unit 904 is a device configured to receive input from the user. The input I/F unit 904 is, for example, a keyboard, a mouse, a touch panel, various types of sensors, and a wearable device. The input I/F unit 904 may be connected to the computer 900 via an interface such as Universal Serial Bus (USB).

The data I/F unit 905 is a device configured to input data from outside the computer 900. The data I/F unit 905 is, for example, a drive device configured to read data stored in various types of storage media. The data I/F unit 905 may be provided outside the computer 900. If the data I/F unit 905 is provided outside the computer 900, the data I/F unit 905 is connected to the computer 900 via an interface such as a USB.

The communication I/F unit 906 is a device configured to perform wired or wireless data communication with an external device of the computer 900 via a network such as the Internet. The communication I/F unit 906 may be provided outside the computer 900. If the communication I/F unit 906 is provided outside the computer 900, the communication I/F unit 906 is connected to the computer 900 via an interface such as a USB.

The display device 907 is a device configured to display various types of information. The display device 907 is, for example, a liquid crystal display, an organic Electro-Luminescence (EL) display, and a display of a wearable device. The display device 907 may be provided outside the computer 900. If the display device 907 is provided outside the computer 900, the display device 907 is connected to the computer 900 via, for example, a display cable. If the touch panel is employed as the input I/F unit 904, the display device 907 may be configured integrally with the input I/F unit 904.

### [Effects of the Present Embodiment]

Thus, an embodiment of the present disclosure is described. According to the embodiment of the present disclosure, the order supporting system 100 is capable of outputting the simplified shape information to the manufacturing section, and can support an order of a product with higher security. The order supporting system 100 can communicate with the manufacturing section device 300 with a reduced communication load by using the simplified shape information with a smaller amount of data.

### [Aspects]

(1) An order supporting method according to one aspect of the present disclosure is a computer-executed order supporting method of supporting an order of a predetermined product including any one of products such as clothing, footwear, accessories, and a product utilized to conform to a part of a body, the method including acquiring product shape information relating to a product shape of the predetermined product, generating, based on the product shape information, simplified shape information indicating a simplified shape of the predetermined product, the simplified shape information allowing for calculation of manufacturing condition information relating to a manufacturing condition of the predetermined product, in a manufacturing section that manufactures the predetermined product, and outputting the simplified shape information.
   Based on the order supporting method according to (1) above, the user can receive a support for an order of a product under higher security.
(2) In the order supporting method according to (1) above, the method may further include acquiring the manufacturing condition information calculated based on the simplified shape information.
   Based on the order supporting method according to (2) above, the user can grasp the manufacturing condition (for example, a price, and a lead time) in the manufacturing section with higher security.
(3) In the order supporting method according to (2) above, the method may further include acquiring simplicity-level information indicating a level of simplicity of the simplified shape information, the simplicity-level information set by the user, the simplified shape information may be generated based on the simplicity-level information, and the manufacturing condition information may be calculated with an accuracy according to the simplicity-level information.
   Based on the order supporting method according to (3) above, the user can grasp a manufacturing condition with the level of simplicity of a product shape tolerated by the user or an accuracy of the manufacturing condition required by the user.
(4) In the order supporting method according to (3) above, the level of simplicity may be set according to a level of security in the product shape information, the level of security set by the user.
   Based on the order supporting method according to (4) above, the user can process the product shape information with a level of security tolerated by the user.
(5) In the order supporting method according to (3) or (4) above, the simplified shape may be expressed by using at least one of a voxel, a point cloud, and a bounding box, and a granularity of at least one of the voxel, the point cloud, and the bounding box may be determined according to the simplicity-level information.
   Based on the order supporting method according to (5) above, the user is capable of receiving an order support using the simplified shape information expressed using at least one of the voxel, the point cloud, and the bounding box.
(6) In the order supporting method according to any of (1) to (5) above, generating the simplified shape information may include extracting at least one item of simplified shape information, out of a plurality of items of simplified shape information, based on the product shape indicated by the product shape information to generate the simplified shape information.
   Based on the order supporting method according to (6) above, the user can receive an order support using at least one item of simplified shape information extracted and generated from the plurality of items of simplified shape information.
(7) In the order supporting method according to any of (1) to (6) above, the manufacturing condition information may include at least any one item of information relating to a price and information relating to a lead time, in manufacturing the predetermined product by the manufacturing section.
   Based on the order supporting method according to (7) above, the user can grasp a cost and a time period required to manufacture the predetermined product.
(8) In the order supporting method according to (3) to (7) above, the manufacturing condition information may include at least one item of information relating to a price and information relating to a lead time, corresponding to the simplicity-level information, in manufacturing the predetermined product by the manufacturing section.
   Based on the order supporting method according to (8) above, the user can grasp a cost and a time period required to manufacture the predetermined product with a level of simplicity of the product shape tolerated by the user or the accuracy of the manufacturing condition required by the user.
(9) In the order supporting method according to (2) to (8) above, the method may further include outputting the acquired manufacturing condition information to an information processing device of the user, and receiving an order from the user based on the manufacturing condition.
   Based on the order supporting method according to (9) above, the user can grasp the manufacturing condition information of the predetermined product with higher security and ordering the predetermined product.
(10) In the order supporting method according to (1) to (9) above, the predetermined product may be manufactured by an additive manufacturing technique or a three-dimensional build-up technique.
   Based on the order supporting method according to (10) above, the user can receive an order support for a product manufactured by a so-called 3D printing technique.
(11) An order supporting system according to another aspect of the present disclosure is an order supporting system for supporting an order and a manufacture of a predetermined product, which is any one of clothing, footwear, accessories, and a product used to conform to a part of a body, the system including a product shape acquisition unit to acquire product shape information relating to a product shape of the predetermined product, a simplified shape generation unit to generate, based on the product shape information, simplified shape information indicating a simplified shape of the predetermined product, the simplified shape information enabling calculation of information relating to a condition for manufacturing the predetermined product in a manufacturing section that manufactures the predetermined product, and a simplified shape output unit to output the simplified shape information.
   Based on the order supporting system according to (11) above, the user can receive a support for ordering a product with higher security.
(12) A non-transitory recording medium for recording an order supporting program according to another aspect of the present disclosure is a non-transitory recording medium for recording an order supporting program for supporting an order of a predetermined product including any one of clothing, footwear, accessories, and a product utilized to conform to a part of a body, the program causing a computer to realize a product shape acquisition unit to acquire product shape information relating to a product shape of the predetermined product, a simplified shape generation unit to generate, based on the product shape information, simplified shape information indicating a simplified shape of the predetermined product, the simplified shape information enabling calculation of manufacturing condition information relating to a condition for manufacturing the predetermined product in a manufacturing section that manufactures the predetermined product, and a simplified shape output unit to output the simplified shape information.

Based on the non-transitory recording medium for recording an order supporting program according to (12) above, the user can receive a support of an order of a product with higher security.

In the present disclosure, the "unit" does not simply mean a physical means, but also includes a case where a function provided in the "unit" is realized by software. Even if a function provided in a single "unit" or device is realized by two or more physical means, devices, or software, functions provided in two or more "units" or devices may be realized by a single physical means, device, or software.

The present embodiment is intended to facilitate understanding of the present disclosure, and is not intended to limit the present disclosure. The present disclosure may be modified or improved without departing from the spirit thereof, and the present disclosure also includes an equivalent thereof.

### [Industrial Applicability]

The present disclosure is useful in a system for supporting an order of a product such as clothing, footwear, accessories, and a product utilized to conform to a part of a body.

## Claims

1. A computer-executed order supporting method of supporting an order of a predetermined product including any one of clothing, footwear, accessories, and a product utilized to conform to a part of a body, the method comprising:
acquiring product shape information relating to a product shape of the predetermined product;
generating, based on the product shape information, simplified shape information indicating a simplified shape of the predetermined product, the simplified shape information allowing for calculation of manufacturing condition information relating to a manufacturing condition of the predetermined product, in a manufacturing section that manufactures the predetermined product; and
outputting the simplified shape information.

2. The order supporting method according to claim 1, further comprising: acquiring the manufacturing condition information calculated based on the simplified shape information.

3. The order supporting method according to claim 2, further comprising: acquiring simplicity-level information indicating a level of simplicity of the simplified shape information, the simplicity-level information set by a user, wherein
the simplified shape information is generated based on the simplicity-level information, and
the manufacturing condition information is calculated with an accuracy according to the simplicity-level information.

4. The order supporting method according to claim 3, wherein the level of simplicity is set according to a level of security in the product shape information, the level of security set by the user.

5. The order supporting method according to claim 1 or 2, wherein the simplified shape is expressed by using at least one of a voxel, a point cloud, and a bounding box.

6. The order supporting method according to claim 3 or 4, wherein the simplified shape is expressed by using at least one of a voxel, a point cloud, and a bounding box, and
a granularity of at least one of the voxel, the point cloud, and the bounding box is determined according to the simplicity-level information.

7. The order supporting method according to any one of claims 1 to 4, wherein generating the simplified shape information comprises extracting at least one item of simplified shape information, out of a plurality of items of simplified shape information, based on a product shape indicated by the product shape information to generate the simplified shape information.

8. The order supporting method according to claim 1 or 2, wherein the manufacturing condition information includes at least any one item of information relating to a price and information relating to a lead time, in manufacturing the predetermined product by the manufacturing section.

9. The order supporting method according to claim 3 or 4, wherein the manufacturing condition information includes at least one item of information relating to a price and information relating to a lead time, corresponding to the simplicity-level information, in manufacturing the predetermined product by the manufacturing section.

10. The order supporting method according to claim 2, further comprising: outputting the acquired manufacturing condition information to an information processing device of a user; and
receiving an order from the user, based on the manufacturing condition.

11. The order supporting method according to any one of claims 1 to 4, wherein the predetermined product is manufactured by an additive manufacturing technique or a three-dimensional build-up technique.

12. An order supporting system for supporting an order and a manufacture of a predetermined product including any one of clothing, footwear, accessories, and a product utilized to conform to a part of a body, the system comprising:
a product shape acquisition unit (120) to acquire product shape information relating to a product shape of the predetermined product;
a simplified shape generation unit (140) to generate, based on the product shape information, simplified shape information indicating a simplified shape of the predetermined product, the simplified shape information enabling calculation of information relating to a condition for manufacturing the predetermined product in a manufacturing section that manufactures the predetermined product; and
a simplified shape output unit (150) to output the simplified shape information.

13. A non-transitory recording medium for recording an order supporting program for supporting an order of a predetermined product including any one of clothing, footwear, accessories, and a product utilized to conform to a part of a body, the program causing:
a computer to realize
a product shape acquisition unit (120) to acquire product shape information relating to a product shape of the predetermined product;
a simplified shape generation unit (140) to generate, based on the product shape information, simplified shape information indicating a simplified shape of the predetermined product, the simplified shape information enabling calculation of manufacturing condition information relating to a condition for manufacturing the predetermined product in a manufacturing section that manufactures the predetermined product, and
a simplified shape output unit (150) to output the simplified shape information.
